# EUROPEAN PATENT APPLICATION

(11) **EP 4 656 593 A1**
(43) Date of publication of application: **03.12.2025**
(21) Application number: 24178907.2
(22) Date of filing: 29.05.2024
(51) Int. Cl.: C01B 3/22, C01B 3/00

(54) **SYSTEM FOR DISCHARGING HYDROGEN FROM A STORAGE MEDIUM CHARGED WITH HYDROGEN, A METHOD RELATING THERETO, AND A METHOD OF CHARGING A STORAGE MEDIUM WITH HYDROGEN**

(71) Applicant: AKROS Energy GmbH, 18299 Rostock-Laage (DE)
(72) Inventor: Massa, Jonas, 18299 Rostock-Laage (DE); Turan, Volkan, 18299 Rostock-Laage (DE); Sponholz, Peter, 18299 Rostock-Laage (DE)
(74) Representative: Hoffmann Eitle

(57) **Abstract**

A system for discharging hydrogen from a storage medium charged with hydrogen comprises a reactor configured to carry out a dehydrogenation reaction, the reactor comprising a storage medium supply port for supplying the storage medium, a storage medium discharge port for discharging the storage medium, a through-flow section through which the storage medium flows, and a hydrogen discharge port for discharging hydrogen discharged from the storage medium, wherein a catalyst is provided in the through-flow section and is configured to perform a dehydrogenation reaction with the storage medium to discharge hydrogen from the storage medium; and a heat transfer element configured to temper the storage medium for the dehydrogenation reaction, wherein the heat transfer element is arranged outside the reactor.

## Description

### FIELD OF THE INVENTION

The present invention relates to a system for discharging hydrogen from a storage medium charged with hydrogen and to a method relating thereto, as well as to a method of charging a storage medium with hydrogen.

### PRIOR ART

Some methods of generating energy from renewable sources, such as solar and wind energy, are not continuously available energy sources comparable to fossil fuels or nuclear power. The energy generated can only be used as electrical or thermal energy when required by using a buffer, such as hydrogen, as an energy storage. The wide range of possible applications for hydrogen in various sectors such as industry, mobility, buildings and energy supply also means that it is increasingly seen as an important component of an energy transition towards a carbon-neutral energy economy.

For this reason, hydrogen is increasingly coming into focus as a sustainable energy storage and attempts are being made to store energy in the form of hydrogen using a variety of processes. In these processes, hydrogen is obtained via electrolysis, photolysis or thermolysis, for example.

However, gaseous hydrogen has the decisive disadvantage that it has a comparatively low density. This leads to huge volumes even with small quantities. Although hydrogen can be stored in a more energy-dense form by compressing it to up to 700 bar or by low-temperature liquefaction at minus 253 °C, these processes present further hurdles to the widespread use of hydrogen in addition to the energy required for storage, as hydrogen is still a flammable substance and therefore poses a potential hazard. It is also difficult to be used and handled as an energy carrier in this form due to the high pressures or cryogenic temperatures.

These disadvantages can be overcome technically by binding the hydrogen to a storage medium chemically. In the field of chemical hydrogen storage, various technologies based on different hydrogen storage mediums, such as carbon dioxide, nitrogen or hydrogen carbonate, are known from the state of the art.

For example, hydrogen is bound to a discharged hydrogen carrier and the charged hydrogen carrier is produced as a result (hydrogenation). If required, the charged hydrogen carrier is then transferred back into the discharged hydrogen carrier, whereby the hydrogen is released again (dehydrogenation). In this way, the hydrogen can serve as an energy carrier for a variety of applications, for which it is otherwise only suitable to a limited extend due to the conventional physical processes described above.

US 2008/0138674 A1 describes a process in which a solid carrier, acting as a reversible hydrogen carrier, is loaded into and unloaded from a fuel storage tank or reservoir to provide a gaseous hydrogen fuel source for use in motor vehicles. The particulate solid carrier may be, for example, a microporous hydrogen absorbing material, a metal alloy hydride, or a complex metal hydride.

However, the large number of different hydrogen storage mediums also leads to a large variance in storage properties. One of these storage properties is the reaction enthalpy, which represents energy required for dehydrogenation of the storage medium. In contrast to purely physical storage technologies, it is ultimately necessary to separate the hydrogen from the storage medium in order to subsequently feed it into energy generation.

### SUMMARY OF INVENTION

Against this background, it is a task of the present invention to provide a system and a method which enable an efficient way of releasing hydrogen from a storage medium and of charging a storage medium with hydrogen.

This problem is solved by the combination of features according to the independent claims. Preferred embodiments of the invention are subject of the figures, the description and the dependent claims.

A system for discharging hydrogen from a storage medium charged with hydrogen comprises a reactor configured to carry out a dehydrogenation reaction, the reactor comprising a storage medium supply port for supplying the storage medium, a storage medium discharge port for discharging the storage medium, a through-flow section through which the storage medium flows, and a hydrogen discharge port for discharging hydrogen discharged from the storage medium, wherein a catalyst is provided in the through-flow section and is configured to perform a dehydrogenation reaction with the storage medium to discharge hydrogen from the storage medium, and a heat transfer element configured to temper the storage medium for the dehydrogenation reaction, wherein the heat transfer element is arranged outside the reactor.

Discharging hydrogen from a storage medium takes place in a chemical dehydrogenation reaction with the storage medium, the particulars of the reaction depending on the type of storage medium utilized in the system. The reaction preferably takes place in the presence of a catalyst which reacts with the storage medium. In the presence of a catalyst, the storage medium (which is also referred to as a reaction system) dehydrogenates and hydrogen is released from the storage medium. The storage medium may be, for example, an aqueous (water-based) reaction system or a solid reaction system.

The system according to the present disclosure provides an efficient way of discharging hydrogen from a storage medium. The storage medium is tempered by the heat transfer element outside of the reactor to have the temperature necessary or desired for the dehydrogenation reaction to be carried out within the reactor. Only little or no additional heat at all (additional to the heat bound to the storage medium supplied into the reactor) needs to be actively transferred to or from the storage medium inside the reactor for the dehydrogenation reaction to be carried out.

"Actively" in the present context implies means intentionally provided to transfer heat to or from the storage medium, while thermal losses or heat conduction normally (i.e., unintentionally) occurring in the system are not considered to be an "active" heat transfer.

An arrangement of the heat transfer element outside the reactor in the present context means that the heat transfer to or from the storage medium occurs outside of the reactor (i.e., particularly outside the through-flow section). Thus, the storage medium is tempered outside of the reactor (in particular, the through-flow section) before entering the reactor (in particular, the through-flow section) via the storage medium supply port, flowing through the through-flow section, and exiting the reactor (in particular, the through-flow section) via the storage medium discharge port. In the present context, the term reactor does thus not necessarily refer to the entire interior of a vessel/tank/chamber, but can also refer only to a region in which a reaction (a dehydrogenation reaction or a hydrogenation reaction) takes place (i.e., for example to the through-flow section).

In particular, the reactor itself (in particular, the through-flow section thereof) does not need to be actively tempered (i.e., heated or cooled). As a result, a complex reactor design with a heat transfer for the dehydrogenation reaction to be carried out within the reactor can not only be avoided but a relatively simple reactor can be utilized in the system. Thereby, costs for manufacturing, setting-up and operating the system are reduced. In other words, a reduction in complexity of the overall system and cost savings can be achieved.

The dehydrogenation reaction is typically an endothermic reaction. Therefore, in the system for discharging hydrogen from the storage medium, the heat transfer element is preferably configured to (directly) heat or to provide (transfer) heat to the storage medium. The heat transfer element arranged outside the reactor is preferably configured to provide the heat necessary or desired for the dehydrogenation reaction to be carried out in the reactor.

In some embodiments, it is preferred that the heat transfer element in the system for discharging hydrogen from the storage medium is configured to cool or extract (transfer) heat from the storage medium for the dehydrogenation reaction.

This allows the system to be operated efficiently even at hot ambient temperatures, where the storage medium (before being cooled by the heat transfer element) may have a higher temperature than a desired temperature for the dehydrogenation reaction. Moreover, a thermal degradation of the storage medium at excessively high temperatures can be avoided, which could otherwise cause the system to malfunction or reduce operating efficiency.

Also, tempering the storage medium to a desired temperature for performing the dehydrogenation reaction, in particular keeping the temperatures for the dehydrogenation reaction at a relatively low level, reduces or even completely eliminates undesired contamination of the hydrogen discharged from the storage medium caused by thermal decomposition thereof.

Since a complex system design is avoided and the dehydrogenation reaction is performed at a relatively low temperature level, the system can be suitably set up and operated even in remote regions where access to energy is difficult.

Storage mediums with a relatively high thermal capacity, for example water-based reaction systems, are particularly advantageous to be utilized in the system for the dehydrogenation. Due to the high thermal capacity, heat bound to the storage medium is effectively stored therein. Hence, during the endothermic dehydrogenation reaction performed in the reactor, the temperature of the storage medium only drops moderately due to the required reaction heat. The storage medium thereby essentially maintains a temperature necessary or desired for the dehydrogenation reaction such that it is prevented that the dehydrogenation reaction essentially comes to a standstill, which may otherwise occur if the temperature of the storage medium becomes too low.

In the system for discharging hydrogen from the storage medium, the storage medium supply port (i.e., the opening the storage medium enters) may be provided at a lower portion, preferably at the bottom of the reactor. The storage medium discharge port (i.e., the opening the storage medium exits) is preferably provided at an upper portion, preferably at the top of the reactor. The hydrogen discharge port may also be provided at an upper portion, preferably at the top of the reactor. In this case, the reactor is preferably a fixed-bed reactor in which the catalyst, for example in the form of particles, is provided as a packing material.

During operation of the system, the storage medium is thus supplied into the reactor at a lower portion thereof and discharged from the reactor at an upper portion thereof. In the presence of the catalyst provided in the through-flow section, the storage medium dehydrogenates, and hydrogen is thereby released therefrom. The released hydrogen rises in the catalyst bed and is discharged at an upper portion of the reactor.

Preferably, the storage medium discharge port and the hydrogen discharge port are formed as separate ports (for example, as separate openings). In this case, the storage medium is discharged from the reactor (in particular, from the through-flow section) via the storage medium discharge port and the hydrogen is discharged from the reactor (in particular, from the through-flow section) via the hydrogen discharge port. In further embodiments, the storage medium discharge port and the hydrogen discharge port may be formed as a single port (for example, as a single opening) . In this case, a single port is provided through which the storage medium and the hydrogen released therefrom are discharged from the reactor (in particular, from the through-flow section). In other words, a two-phase system (comprising hydrogen gas and the storage medium) may be discharged from the reactor (in particular, from the through-flow section) through the storage medium discharge port and hydrogen discharge port formed as a single port.

A piping through which the two-phase system is discharged from the reactor may be branched off at a position downstream of the reactor into a storage medium discharge piping (through which the storage medium discharged from the reactor flows) and a hydrogen discharge piping (through which the hydrogen discharged from the reactor flows). Additionally or alternatively, the system may further comprise a separation unit arranged downstream of the reactor, the separation unit being configured to separate hydrogen and/or storage medium from the two-phase system discharged from the reactor. In other words, the separation units separates a flow of the two-phase system into a flow of storage medium and a flow of hydrogen.

The storage medium to be discharged from hydrogen in the system described above may have been previously charged with hydrogen. This may be done in a (separate or individual) system for charging a storage medium with hydrogen, the system comprising a reactor configured to carry out a hydrogenation reaction, the reactor comprising a storage medium supply port for supplying the storage medium, a storage medium discharge port for discharging the storage medium, a through-flow section through which the storage medium flows, and a hydrogen supply port for supplying hydrogen, wherein a catalyst is provided in the through-flow section and is configured to perform a hydrogenation reaction with the storage medium to charge the storage medium with hydrogen, and a heat transfer element configured to temper the storage medium for the hydrogenation reaction, wherein the heat transfer element is arranged outside the reactor.

Where applicable, all definitions with respect to the system for discharging hydrogen from a storage medium apply to the system for charging a storage medium with hydrogen (and vice versa) .

Charging a storage medium with hydrogen takes place in a chemical hydrogenation reaction with the storage medium, the particulars of the reaction depending on the type of storage medium utilized in the system. This reaction preferably takes place in the presence of a catalyst and hydrogen which react with the storage medium. In the presence of a catalyst, the storage medium (which is also referred to as a reaction system) hydrogenates, and hydrogen is thereby bound to the storage medium as a carrier material. The storage medium may be, for example, an aqueous (water-based) reaction system or a solid reaction system.

The system according to the present disclosure provides an efficient way of charging a storage medium with hydrogen. The storage medium is tempered by the heat transfer element outside of the reactor to have the temperature necessary or desired for the hydrogenation reaction to be carried out within the reactor. The same advantages as discussed above with respect to the system for discharging hydrogen from the storage medium can be achieved.

The hydrogenation reaction is typically an exothermic reaction. Therefore, in the system for charging the storage medium with hydrogen, the heat transfer element is preferably configured to (directly) cool or extract (transfer) heat from the storage medium.

In some embodiments, it is however preferred that the heat transfer element in the system for charging a storage medium with hydrogen is configured to heat or to provide (transfer) heat to the storage medium for the hydrogenation reaction.

This allows the system to be operated efficiently even at relatively cold ambient temperatures, where the storage medium (before being heated by the heat transfer element) may have a lower temperature than a desired temperature for the hydrogenation reaction.

Also, tempering the storage medium to a desired temperature has the advantage of improving responsiveness of the storage medium for performing the hydrogenation reaction. In other words, some storage mediums - after having been dehydrogenated - have a relatively low temperature which impairs responsiveness of the storage medium for the subsequent hydrogenation process. As a consequence thereof, the hydrogenation reaction with the storage medium only takes place relatively slow. That is, it takes a long time for the storage medium to reach a predetermined degree of hydrogenation, thereby lowering productivity and efficiency of the system.

Moreover, it is possible that the heat generated by the exothermic hydrogenation reaction may not be sufficient to bring the storage medium to a desired temperature. Even for the exothermic hydrogenation reaction it may thus be advantageous to heat or provide heat to the storage medium, thereby improving responsiveness and with that the efficiency and productivity of the system.

In the system for charging the storage medium with hydrogen, the storage medium supply port (in particular, where the medium enters the through-flow section) may be provided at an upper portion, preferably at the top of the reactor. The storage medium discharge port (in particular, where the medium exits the through-flow section) may be provided at a lower portion, preferably at the bottom of the reactor. The storage medium supply port and the storage medium discharge port may thus be provided at opposite positions with respect to the system for discharging hydrogen from the storage medium. In this case, the reactor is preferably a trickle-bed reactor.

When operating the system, the storage medium is thus supplied into the reactor at an upper portion thereof and discharged from the reactor at a lower portion thereof. The storage medium dripples onto the catalyst bed and hydrogenates in the presence of the catalyst and hydrogen.

In other embodiments, it is preferred that in the system for charging the storage medium with hydrogen the storage medium supply port and storage medium discharge port are provided at positions as described above for the system for discharging hydrogen from a storage medium.

Preferably, the storage medium supply port and the hydrogen supply port are formed as separate ports (for example, as separate openings). In this case, the storage medium is supplied to the reactor (in particular, to the through-flow section) via the storage medium supply port and the hydrogen is supplied to the reactor (in particular, to the through-flow section) via the hydrogen supply port. In further embodiments, the storage medium supply port and the hydrogen supply port may be formed as a single port (for example, as a single opening). In this case, a single port is provided through which the storage medium and the hydrogen are supplied to the reactor (in particular, to the through-flow section). In other words, a two-phase system (comprising hydrogen gas and the storage medium) may be supplied to the reactor (in particular, to the through-flow section) through the storage medium supply port and hydrogen supply port formed as a single port.

Discharging hydrogen from a storage medium and charging a storage medium with hydrogen may also be performed subsequently or alternately in the same system, such that the storage medium can be reversibly charged with and discharged from hydrogen in the same system. In this case, the system for discharging hydrogen from a storage medium described above is further for charging a storage medium with hydrogen, wherein the reactor is further configured to carry out a hydrogenation reaction and comprises a hydrogen supply port for supplying hydrogen, wherein a catalyst is provided in the through-flow section and is configured to perform a hydrogenation reaction with the storage medium to charge the storage medium with hydrogen, wherein the system further comprises a heat transfer element configured to temper the storage medium for the hydrogenation reaction, wherein the heat transfer element is arranged outside the reactor (in particular outside the through-flow section).

The storage medium can thus be reversibly charged with and discharged from hydrogen in the same or separate systems. Discharging hydrogen from a storage medium and charging a storage medium with hydrogen, i.e., carrying out the dehydrogenation reaction and the hydrogenation reaction, typically takes place as a reversible chemical equilibrium reaction. That is, depending on the boundary conditions set in the system(s), either the dehydrogenation reaction for discharging hydrogen from the storage medium or the hydrogenation reaction for charging the storage medium with hydrogen is promoted. It will thus be appreciated that the position of the equilibrium may not entirely shift towards a dehydrogenation reaction or a hydrogenation reaction, such that both the hydrogenation reaction and the dehydrogenation reaction may take place simultaneously. By adjusting the boundary conditions of the system, one reaction can however dominate over the other (i.e., one reaction takes place mainly or to a greater extent).

In the present context, when referring to the system for discharging hydrogen from a storage medium, it is referred to a system configured such that a dehydrogenation reaction dominates over the hydrogenation reaction. When referring to the system for charging a storage medium with hydrogen, it is referred to a system configured such that a hydrogenation reaction dominates over a dehydrogenation reaction.

The boundary conditions of the system mentioned above may be a condition set in the reactor. For example, by altering the temperature and/or pressure in the reactor, the equilibrium can be shifted towards one side of the equilibrium reaction and hence either a hydrogenation or a dehydrogenation reaction is promoted. In this way, the storage medium is either hydrogenated, i.e., charged with hydrogen, or dehydrogenated, i.e., discharged from hydrogen.

Unless otherwise specified herein, the present disclosure applies to both the system for discharging hydrogen from a storage medium charged with hydrogen, the system for charging a storage medium with hydrogen, and to the system for both discharging hydrogen from a storage medium charged with hydrogen and the system for charging a storage medium with hydrogen.

The catalyst utilized in the system(s) for discharging hydrogen from a storage medium (i.e., for the dehydrogenation reaction) and for charging a storage medium with hydrogen (i.e., for the hydrogenation reaction) may be the same catalyst or different catalysts. The catalyst of the system for discharging hydrogen from a storage medium may thus be further configured to perform a hydrogenation reaction with the storage medium. The catalyst of the system for charging a storage medium with hydrogen may thus be further configured to perform a dehydrogenation reaction with the storage medium.

In the case of a single system for discharging hydrogen from a storage medium and for charging a storage medium with hydrogen, two individual heat transfer elements (individually configured to temper the storage medium for the hydrogenation reaction and for the dehydrogenation reaction, respectively) or a single heat transfer element, selectively configured to temper the storage medium for the hydrogenation reaction and for the dehydrogenation reaction, may be provided.

The heat transfer element described above is an active means for transferring heat to or from the storage medium, such as a heat exchanger configured to exchange heat with the storage medium. The heat transfer element may also be configured as an (active) heat source or heat sink, directly heating or cooling the storage medium.

The storage medium is preferably a bicarbonate/formate-based aqueous reaction system. The bicarbonate/formate-based aqueous reaction system is an aqueous reaction system comprising bicarbonate and formate salts. Typically, this will be in the form of an aqueous solution comprising bicarbonate and formate salts.

This system relies on the reduction of bicarbonate to formate salts or formic acid in order to store hydrogen (Eqn. 1), and the oxidation of formate to bicarbonate to release hydrogen (Eqn. 2). The system can be described according to the following exemplary reaction formulae:

KHCO₃ + H₂ -> HCOOK + H₂O Eqn. 1

HCOOK + H₂O -> H₂ + KHCO₃ Eqn. 2

In particular, the storage medium is preferably an aqueous reaction system of the components formate salt, hydrogen carbonate salt and carbonate salt. Preferably, the reaction system substantially consists of carbonate salts, bicarbonate salts and formate salts dissolved in water. Typically, the reaction system substantially consists of carbonate salts, bicarbonate salts and formate salts dissolved in water. The reaction system has thus the components formate salt (A₂HCOO), bicarbonate salt (A₂HCO₃) and carbonate salt (A₃CO₃), wherein A₁, A₂ and A₃ are counterions, dissolved in water. Preferably, the reaction system comprises at least 75 wt% of the components A₁HCOO, A₂HCO₃, and A₃CO₃, more preferably at least 80 wt%, more preferably at least 90 wt%, more preferably at least 95 wt%, more preferably at least 99 wt%, and even more preferably at least 99.9 wt%. The above mentioned wt% are relative to the total dry weight of the reaction system.

In a preferred embodiment, the bicarbonate/formate-based aqueous reaction system comprises substantially one type of counterion. Consequently, A₁ and A₂ and optionally A₃ are all the same. Typically, no further counterions are present other than those associated with the typical impurities of the salt. For instance, in one embodiment A₁, A₂ and (where present) A₃ being all the same, comprise at least 95 mol% of the counterions to the bicarbonate, formate, and (where present) carbonate in the aqueous reaction system, preferably at least 97 mol%, and even more preferably at least 99 mol%. In a particularly preferred embodiment, the counterions are K⁺-ions, meaning that A₁, A₂ and (where present) A₃ are all K⁺.

In the presence of a catalyst, the bicarbonate/formate-based aqueous reaction system hydrogenates bicarbonate and dehydrogenates formate. Typically, this catalyst is configured to hydrogenate bicarbonate and dehydrogenate formate in a manner consistent with the chemical equations given above. Preferably, the same catalyst catalyzes the hydrogenation of bicarbonate and the dehydrogenation of formate.

The catalyst may not be particularly limited. Preferably, the catalyst is a heterogenous catalyst. Exemplary catalysts include Pd-based catalysts, such as Pd₄S, Pd, Pd-Au, Pd@Ag, Pd-Cu₂O, PdS, Pd/C, Pd/Al₂O₃, Pd/TiO2. In a preferred embodiment, the catalyst is a Pd/C catalyst or a Pd/TiO2-based catalyst.

The bicarbonate/formate-based aqueous reaction system is characterized by a relatively low reaction enthalpy and a relatively high thermal capacity. The inventors have surprisingly found that as a result thereof, the heat input required to release hydrogen from the reaction system does not have to be provided at the reaction side but is more easily implemented from a technical point of view.

For example, the low reaction enthalpy of the reaction system allows discharging hydrogen from said reaction system at relatively low or only moderate temperature levels. As a result, no complex and therefore expensive reactor needs to be provided for supplying heat for the dehydrogenation reaction. Rather, all the heat necessary or desired for performing the dehydrogenation reaction can be provided by a relatively simple heat transfer element arranged outside the reactor and is then transported via the storage medium into the reactor. Hence, complexity and costs of the reactor and the overall system can be reduced.

Performing the dehydrogenation reaction at relatively low temperature levels is also advantageous to suppress thermal decomposition of the reaction system. Bicarbonate is susceptible to thermal decomposition when dehydrogenating formate into bicarbonate, thereby generating carbonate and carbon dioxide. Reducing reaction temperatures reduces or even completely eliminates undesired contamination of the discharged hydrogen by carbon dioxide.

Preferably, the heat transfer element is arranged and configured to temper (i.e., heat or cool) the storage medium before it is supplied into the reactor (in particular, into the through-flow section). It is particularly preferred that the reactor (in particular, the through-flow section) has no heat transfer element.

This allows to provide a relatively simple heat transfer element outside the reactor for tempering the storage medium for the dehydrogenation or hydrogenation reaction. Complexity of the reactor is thus reduced and manufacturing and operating costs of the overall system are reduced.

The heat transfer element may, for example, be provided at a position upstream of the storage medium supply port of the reactor, such as at a supply line providing a flow connection for the storage medium to the storage medium supply port.

In the system(s) according to the present disclosure, the storage medium supply port may be connected to the storage medium discharge port via a flow connection outside the reactor.

The system (s) thus form(s) a closed loop system in which the storage medium can circulate. Preferably, a pump (in particular a high-pressure pump) is provided for circulating the storage medium in the closed loop system.

In other embodiments, the system(s) may also form an open system in which the storage medium supply port and the storage medium discharge port are not connected via flow connection outside the reactor.

The system(s) may be configured to be operated in a batch process or in a flow process. In a batch process, the storage medium is supplied into the reactor (e.g., up to a predetermined amount), dehydrogenated or hydrogenated therein, and is subsequently discharged from the reactor. Thus, the batch process is a discontinuous process. In a flow process, the storage medium is continuously supplied to and discharged from the reactor while dehydrogenating or hydrogenating by flowing through the reactor (in particular the through-flow section thereof). Thus, the flow process represents a continuous process.

Preferably, the system(s) comprise(s) a storage medium flow channel providing a first flow connection connecting the storage medium supply port and the storage medium discharge port to a first reservoir for storing the storage medium, or to a first and a second reservoir for storing the storage medium, respectively. In other words, the storage medium supply port and the storage medium discharge port may be connected to the same reservoir or to different reservoirs.

The reservoir(s) allow(s) storage of the storage medium. Typically, charging the storage medium with hydrogen and discharging hydrogen from the storage medium is to be performed at different points in time. For example, if surplus energy is available, the storage medium can be charged with hydrogen, thereby utilizing hydrogen as an energy buffer to store surplus energy. The charged storage medium can be stored in the reservoirs until a demand for energy arises. Then, the storage medium can be discharged again, thereby releasing the stored hydrogen for energy generation. The system can thus be operated in an intermittent flow process, in which the storage medium is intermittently stored in the reservoir(s), for example between a dehydrogenation and a hydrogenation operation of the system.

Preferably, the system(s) further comprise(s) a bypass providing a second flow connection connecting the storage medium supply port and the storage medium discharge port and bypassing the reservoir(s). In other words, the second flow connection provides a flow connection between the storage medium supply port and the storge medium discharge port outside of the reactor, wherein the second flow connection does not connect the storage medium supply and discharge port with the reservoir(s) (i.e., the reservoir(s) are bypassed).

The storage medium discharged from the reactor can thus be directly supplied into the reactor again, without being temporarily stored in the reservoir(s). This allows operating the system in a continuous cycle, i.e., the storage medium is recycled through the reactor several times. In this way, higher yields can be obtained. It is advantageous to circulate the storage medium through the reactor several times in order to further increase the amount of hydrogen stored in the storage medium (i.e., the degree of hydrogenation when hydrogenating the storage medium) or to further reduce the amount of hydrogen stored in the storage medium (i.e., the degree of hydrogenation when dehydrogenating the storage medium).

The system(s) preferably further comprise(s) a switching valve configured to switch between a state in which the storage medium flows along the first flow connection or a state in which the storage medium flows along the second flow connection.

This allows selective operation of the system either by storing the charged or discharged storage medium in the reservoir(s) (corresponding to the first flow connection), or by continuously circulating the storage medium through the reactor several times (corresponding to the second flow connection). Hence, the system can be operated by reversibly storing and releasing hydrogen in the storage medium in an intermittent flow process or in a continuous cycle (continuous flow process).

A method of discharging hydrogen from a storage medium charged with hydrogen or of charging a storage medium with hydrogen comprises the steps of tempering the storage medium by a heat transfer element, supplying the storage medium into a reactor, and performing a hydrogen discharging step in which the storage medium performs a dehydrogenation reaction with a catalyst provided in the reactor, thereby discharging hydrogen from the storage medium, or performing a hydrogen charging step in which hydrogen is supplied into the reactor and the storage medium performs a hydrogenation reaction with a catalyst provided in the reactor, thereby charging the storage medium with hydrogen.

Where applicable, all definitions from the description above with respect to the system(s) apply to the method(s) (and vice versa).

As described above, discharging hydrogen from a storage medium and charging a storage medium with hydrogen, i.e., carrying out the dehydrogenation reaction and the hydrogenation reaction, typically takes place as a reversible chemical equilibrium reaction. It will thus be appreciated that the position of the equilibrium may not entirely shift towards a dehydrogenation reaction or a hydrogenation reaction, such that both the hydrogenation reaction and the dehydrogenation reaction may take place simultaneously.

The method of discharging hydrogen from a storage medium thus describes a method in which a dehydrogenation reaction dominates over a hydrogenation reaction, and the method of charging a storage medium with hydrogen describes a method in which a hydrogenation reaction dominates over a dehydrogenation reaction. The method can also be described as being a (single) method of reversibly charging and discharging a storage medium with/from hydrogen.

Unless otherwise specified, the present disclosure applies to the method of discharging hydrogen from a storage medium charged with hydrogen, to the method of charging a storage medium with hydrogen, and to the method of reversibly charging and discharging a storage medium with/from hydrogen. The method(s) may be performed by the system(s) as described above.

In the method according to the present disclosure, the storage medium used is preferably a storage medium as described above. In particular, it may be an aqueous (water-based) reaction system, preferably an aqueous reaction system of the components formate salt, hydrogen carbonate salt and carbonate salt.

The method(s) may be performed as a batch process or as a flow process, as discussed above with respect to the system(s).

The tempering step may include a step of transferring heat to or from the storage medium. In particular, the tempering step may include a step of heating or providing (transferring) heat to the storage medium (particularly preferred for the endothermic dehydrogenation reaction), or a step of cooling or extracting (transferring) heat from the storage medium (particularly preferred for the exothermic hydrogenation reaction).

However, as described above, in some embodiments, it is preferred that the storage medium is cooled (heat is transferred therefrom) in the method of discharging hydrogen from the storage medium. Moreover, in some embodiments, it is preferred that the storage medium is heated (heat is transferred thereto) in the method of charging the storage medium with hydrogen.

The technical effects as described above can be achieved in this way.

The tempering step is preferably performed by the heat transfer element as described above. The heat transfer element may be configured and arranged as discussed above with respect to the system(s).

Preferably, in the tempering step, the storage medium is tempered to a predetermined temperature, preferably to 20 - 100 °C, more preferably to 40 - 95 °C or even more preferably to 60 - 90 °C, by the heat transfer element for carrying out the dehydrogenation or hydrogenation reaction.

The above temperature ranges are preferred to perform a hydrogenation reaction or a dehydrogenation reaction with a desired responsiveness of the storage medium. Moreover, undesired contamination of the hydrogen discharged from the storage medium caused by thermal decomposition thereof can be reduced or even be (basically completely) eliminated.

The step of tempering the storage medium is preferably performed prior to the step of supplying the storage medium into the reactor. In other words, the heat transfer element tempers the storage medium preferably before it is supplied into the reactor. No additional heat for the dehydrogenation or hydrogenation reaction needs to be (actively) supplied into or extracted from the storage medium within reactor. In particular, the reactor is preferably not actively tempered (i.e., heated or cooled).

As discussed above, "actively" in the present context implies a step of intentionally transferring heat to or from the storage medium, while thermal losses and heat transfer normally (unintentionally) occurring in the system are not considered an "active" heat transfer.

By transferring all the heat to or from the storage medium at a position outside of the reactor such that the storage medium has the required or desired temperature to carry out the dehydrogenation or hydrogenation reaction, the reactor itself can be designed less complex. This reduces complexity of the overall system, and the costs of both the reactor and the overall system can be reduced.

The storage medium is supplied into the reactor via the storage medium supply port. The storage medium supply port may be arranged and the reactor itself may be configured as discussed above with respect to the system(s).

For the hydrogen discharging step, the reactor is preferably pressurized to greater than 0 bar and less than or equal to 3 bar.

Thereby, the equilibrium of the chemical reaction is shifted towards a dehydrogenation reaction such that the storage medium performs a dehydrogenation reaction in the presence of a catalyst. Hydrogen is thereby discharged from the storage medium.

For the hydrogen charging step, the reactor is preferably pressurized to greater than or equal to 5 bar and less than or equal to 60 bar, more preferably to greater than or equal to 10 bar and less than or equal to 30 bar. The reactor may be pressurized by use of hydrogen (i.e., by controlling the supply or discharge of hydrogen).

Under such conditions, the equilibrium of the chemical reaction is shifted towards a hydrogenation reaction such that the storage medium performs a hydrogenation reaction in the presence of a catalyst and hydrogen. Thereby, the storage medium is charged with hydrogen.

The catalyst utilized in the hydrogen discharging step may be the same catalyst used in the hydrogen charging step (and vice versa) .

Preferably, the storage medium is discharged from the reactor (via the storage medium discharge port as discussed above) and selectively supplied into a reservoir for storing the storage medium or supplied into the reactor again. For example, the storage medium can be circulated through the reactor several times (i.e., two or more times) without being stored in a reservoir in between. In particular, the step of supplying the storage medium into the reactor, the hydrogen discharging step or the hydrogen charging step (as the case may be), and optionally the tempering step may be repeatedly carried out, for example for two or more times.

The method of discharging hydrogen from the storage medium or charging the storage medium with hydrogen may thus be carried out in an intermittent flow process, by temporarily storing the storage medium in a reservoir, or in a continuous cycle (continuous flow process). In a continuous flow process, higher yields can be obtained by letting the storage medium circulate several times through the reactor.

### BRIEF DESCRIPTION OF THE FIGURES

The following figures illustrate examples of a system for discharging hydrogen from a storage medium charged with hydrogen performing a method of discharging hydrogen from a storage medium charged with hydrogen, and of a system for charging a storage medium with hydrogen performing a method of charging a storage medium with hydrogen. In these figures, same reference signs refer to features throughout the drawings that have the same or an equivalent function and/or structure. It is to be understood that the figures illustrate examples according to the present disclosure without limiting the invention thereto.
Fig. 1 is a schematic view of a system for discharging hydrogen from a storage medium charged with hydrogen.
Fig. 2 is a schematic view of a system for charging a storage medium with hydrogen.

### DETAILED DESCRIPTION OF PREFERRED EMBODIMENTS

The system for discharging hydrogen from a storage medium charged with hydrogen and/or for charging a storage medium with hydrogen, as well as the method of discharging hydrogen from a storage medium charged with hydrogen and/or of charging a storage medium with hydrogen are further described in more detail with reference to the accompanying figures. The arrows in the figures depict a direction of flow of storage medium and/or hydrogen within the system(s).

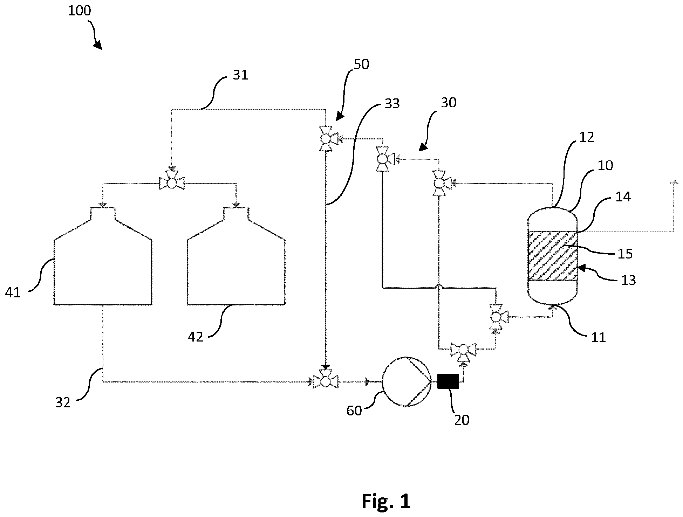

Figure 1 schematically illustrates a system 100 for discharging hydrogen from a storage medium charged with hydrogen. The system 100 comprises a reactor 10. The reactor comprises a storage medium supply port 11 arranged at the bottom (lower portion) of the reactor 10, and a storage medium discharge port 12 arranged at the top (upper portion) of the reactor 10. Storage medium can be supplied into the reactor 10 via said storage medium supply port 11, and storage medium can be discharged from the reactor 10 via said storage medium discharge port 12. The reactor further comprises a hydrogen discharge port 14 for discharging hydrogen which has been released from the storage medium.

The positions of the storage medium supply and discharge port 11, 12 as well as of the hydrogen discharge port 14 are not limited to the positions illustrated in Figure 1. The storage medium supply port 11 may also be arranged at the top (upper portion) of the reactor 10, and the storage medium discharge port 12 may also be arranged at the bottom (lower portion) of the reactor 10.

While Figure 1 illustrates separate ports (e.g., openings) for the storage medium discharge port 12 and the hydrogen discharge port 14, the storage medium discharge port 12 and the hydrogen discharge port 14 may also be formed as a single port (e.g., opening). In this case, a two-phase system which comprises the storage medium and hydrogen gas discharged from the storage medium is discharged from the reactor 10 through the storage medium discharge port 12 and the hydrogen discharge port 14.

A through-flow section 13 through which the storage medium flows is provided within the reactor 10. Within the reactor 10, the storage medium flows from the storage medium supply port 11 to the storage medium discharge port 12, thereby passing through the through-flow section 13. In the through-flow section 13, a catalyst 15 is provided. The storage medium supply port 11 may be understood as the opening for the storage medium to enter the through-flow section 13. Likewise, the storage medium discharge port 12 may be understood as the opening for the storage medium to exit the through-flow section 13. Moreover, the hydrogen discharge port 14 may be understood as the opening for the hydrogen to exit the through-flow section 13.

The reactor 10 is configured to carry out a dehydrogenation reaction. In particular, the catalyst 15 is configured to perform a dehydrogenation reaction with the storage medium, thereby discharging hydrogen from the storage medium. In other words, under the conditions set in the reactor 10, during contact time of the storage medium flowing through the through-flow section 13 with the catalyst 15, a dehydrogenation reaction is carried out. Thereby, hydrogen stored in the storage medium is released therefrom.

The specific type of catalyst 15 provided in the through-flow section 13 depends on the type of storage medium utilized in the system 100. It is not particularly limited to specific catalysts, as long as the catalyst 15 is suitable to perform a dehydrogenation reaction with the storage medium within the reactor 10.

As discussed above, a dehydrogenation reaction typically takes place as part of a reversible chemical equilibrium reaction. By adjusting the conditions (such as temperature and/or pressure) within the reactor 10, the equilibrium can be shifted either towards a dehydrogenation or hydrogenation reaction. In the system 100 for discharging hydrogen from a storage medium, conditions in the reactor 10, i.e., a temperature and/or a pressure, are set such that a dehydrogenation reaction dominates over a hydrogenation reaction (the equilibrium is shifted towards a dehydrogenation reaction). Thereby, hydrogen is effectively released from a storage medium.

The reactor 10 is preferably formed as a fixed-bed (packed bed) reactor in which the catalyst 15, for example in the form of particles, is provided as a packing material.

A piping forming storage medium flow channels is connected to the reactor 10, in particular to the storage medium supply port 11 and to the storage medium discharge port 12. The storage medium can be supplied into said reactor 10 and discharged from said reactor 10 via said piping.

An additional piping forming a hydrogen flow channel may also be connected to the hydrogen discharge port 14. The hydrogen discharged from the storage medium can be discharged from the reactor 10 through said hydrogen flow channel. The hydrogen discharge port 14 may be connected to a hydrogen reservoir via said hydrogen flow channel.

The system 100 according to Figure 1 is a closed (circulation) system, i.e., the piping forms a (closed) flow connection 30 for the flow of storage medium between the storage medium discharge port 12 and the storage medium supply port 11 outside the reactor 10. In other words, the storage medium may not be discharged from the system 100 and no additional storage medium may be charged into the system 100. That is, storage medium that has been discharged from the reactor 10 may be subsequently (either immediately or after having been temporarily stored) reintroduced into the reactor 10.

A pump 60 (a circulation pump) is provided in the system 100 for circulating the storage medium through said piping. The system 100 can thus be operated as a (continuous) cycle in which the storage medium discharged from the reactor 10 may reenter the reactor 10 (either immediately after being discharged from the reactor 10 or after being stored in a reservoir) by being circulated through the flow connection 30.

However, in other embodiments, the system 100 may also be an open system, in which the storage medium supply port 11 and the storage medium discharge port 12 are not connected to each other by a flow connection outside the reactor 10. In this case, storage medium is charged into the system 100 and supplied into the reactor 10. After being discharged from the reactor 10, the storage medium is discharged from the system 100.

This allows to reduce space required to build up the system 100. Moreover, storage medium "batteries" charged with hydrogen can be transported to a certain location where energy is required. The charged batteries can be connected to the open system and hydrogen can be discharged therefrom by dehydrogenating the storage medium. Once discharged, the storage medium battery can be disconnected from the system again and may be transported to a different location to be recharged with hydrogen again. In this way, energy can be delivered to remote regions in which access to energy is otherwise difficult.

In addition, transportability of hydrogen is enhanced. Storing hydrogen in a storage medium which is a chemical reaction system eliminates the need of energy-dense compressing or low-temperature liquefaction. In case of the bicarbonate/formate-based aqueous reaction system, this system also has reduced hazard potential due to its low toxicity. The storage medium offers high storage efficiency and is thus suitable for large-scale use, even on a non-industrial scale.

The system 100 further comprises a heat transfer element 20 arranged outside the reactor 10. The heat transfer element 20 is configured to temper the storage medium for the dehydrogenation reaction. That is, the heat transfer element 20 tempers the storage medium to a necessary or desired temperature such that the endothermic dehydrogenation reaction can be carried out within the reactor 10.

The heat transfer element 20 is preferably arranged at the piping (storage medium flow channel) which is connected to the storage medium supply port 11. In other words, the heat transfer element 20 may be arranged at the piping forming a flow connection for supplying storage medium into the reactor 10. Put differently, the heat transfer element 20 is arranged and configured to temper the storage medium before it is supplied into the reactor 10. For example, the heat transfer element 20 is arranged in the vicinity of the storage medium supply port 11.

The heat transfer element 20 may be formed as a heat exchanger which transfers heat to or from the storage medium by means of a heat exchange. However, the heat transfer element 20 may also be configured as a heat source, for example as an electrical heater, which generates heat for directly heating the storage medium.

In the system 100, apart from the energy transferred to or from the storage medium by means of the heat transfer element 20, no further energy needs to be actively supplied to or transferred from the system 100 for the dehydrogenation reaction to be carried out. The heat transfer element 20 provides the energy which is necessary such that the dehydrogenation reaction is carried out within the reactor 10.

In particular, the reactor 10 does not need to be actively tempered, i.e., heated or cooled. This means that the reactor 10 itself does not require any heat transfer element. In this way, the reactor 10 can be formed as a relatively simple reactor which does not require a complex internal structure for transferring heat for the dehydrogenation reaction. Thereby, overall complexity of the system 100 is reduced and cost savings for setting up and operating the system 100 can be realized.

It can be said that the dehydrogenation reaction carried out in the reactor 10 is an essentially adiabatic process. That is, within the reactor 10 no heat is supplied to or transferred from the system 100 for the dehydrogenation reaction. This should, however, not be construed in a strict literal thermodynamical sense, since heat losses or unintentional heat exchange may still occur in the reactor 10.

The heat transfer element 20 is preferably configured to heat the storage medium to carry out the (endothermic) dehydrogenation reaction within the reactor 10. In this way, the heat transfer element 20 is configured as a heat supply element.

The bicarbonate/formate-based aqueous reaction system is particularly advantageous in this regard due to its relatively low reaction enthalpy in comparison to other reaction systems. This allows discharging hydrogen from said reaction system at relatively low or only moderate temperature levels. The heat transfer element 20 provides the heat necessary or desired for the dehydrogenation reaction such that no further heat needs to be provided within the reactor 10. A less complex and cheaper reactor 10 can thus be utilized in the system 100.

Moreover, as a result of the low reaction enthalpy, the amount of energy necessary for releasing the hydrogen from the storage medium is reduced. Therefore, the efficiency of the hydrogen storage system 100 is enhanced and costs for operating the system 100 can be reduced.

Performing the dehydrogenation reaction at relatively low temperature levels is also advantageous to suppress thermal decomposition of the reaction system. Bicarbonate is susceptible to thermal decomposition when dehydrogenating formate into bicarbonate, thereby generating carbonate and carbon dioxide. Reducing reaction temperatures reduces or even completely eliminates undesired contamination of the discharged hydrogen.

When using a reaction system with a relatively high thermal capacity, for example an aqueous (water-based) reaction system, the high thermal capacity owing to the water content of the reaction system leads to the advantageous effect that the temperature only moderately drops due to the required reaction heat for the dehydrogenation reaction. The storage medium thus essentially maintains the temperature which is necessary or desired for the dehydrogenation reaction within the reactor 10. A standstill of the dehydrogenation reaction due to a temperature of the storage medium becoming too low (thereby impairing responsiveness of the storage medium) is thus prevented.

In addition, in a subsequent cycle in which the storage medium is again supplied into the reactor 10 after having been discharged therefrom, less or even no heat thus needs to be provided by the heat transfer element 20 for maintaining the desired temperature of the storage medium. Hence, operating costs are further reduced while efficiency of the system 100 is improved.

However, in some embodiments, it may be more preferred that the heat transfer element 20 is configured to cool the storage medium for carrying out the dehydrogenation reaction within the reactor 10.

This allows the system 100 to be operated efficiently even at hot ambient temperatures, where the storage medium (before being cooled by the heat transfer element 20) may have a higher temperature than a desired temperature for the dehydrogenation reaction. A thermal degradation of the storage medium, in particular of the formate contained in the bicarbonate/formate-based aqueous reaction system, is thus eliminated.

The storage medium supply port 11 and the storage medium discharge port 12 may be connected via a storage medium flow channel providing a first flow connection 31, 32 (outside the reactor 10). The first flow connection 31, 32 connects the storage medium supply and discharge port 11, 12 through a first reservoir 41 and/or a second reservoir 42. In the system 100 illustrated in Figure 1, the storage medium discharge port 12 is connected to the first reservoir 41 and the second reservoir 42. The storage medium supply port 11 is only connected to the first reservoir 41 but may also be connected to the second reservoir 42.

The reservoirs 41, 42 are configured to (temporarily) store the storage medium. For example, the storage medium which has been discharged from the reactor 10 via the storage medium discharge port 12 can be temporarily stored in (one of) the reservoirs 41, 42. When desired, the storage medium stored in (one of) the reservoirs 41, 42 may be discharged therefrom and be fed into the reactor 10 via the storage medium supply port 11.

Typically, charging the storage medium with hydrogen and discharging hydrogen from the storage medium is to be performed at different points in time. The reservoirs 41, 42 allow storage of the storage medium in the meantime. For example, the storage medium may be charged with hydrogen if an energy surplus is available and be subsequently stored in the reservoir(s) 41, 42. If there is an energy demand, the storage medium can be discharged from the reservoir (s) 41, 42 such that the storage medium can be discharged from hydrogen for energy generation.

The system 100 comprises two reservoirs 41 and 42, but in other embodiments the system 100 may only comprise one reservoir or more than two reservoirs.

The storage medium supply port 11 and the storage medium discharge port 12 may also be connected via a storage medium flow channel providing a second flow connection 33 (outside the reactor 10). The storage medium flow channel providing the second flow connection 33 forms a bypass for bypassing the reservoirs 41, 42. In other words, the bypass does not provide a flow connection for the storage medium via the reservoirs 41, 42, but directly between the storage medium supply and discharge port 11, 12 (via the pump 60 and the heat transfer element 20).

This allows continuously circulating the storage medium through the reactor 10. Thereby, the amount of hydrogen stored in the storage medium can be further increased in each cycle until a desired degree of hydrogenation of the storage medium is reached.

A switching valve 50 is provided in the system 100 which is configured to selectively switch between a state in which the storage medium in operation is made to flow along the first flow connection 31, 32 or a state in which the storage medium in operation is made to flow along the second flow connection 33. In other words, the switching valve 50 can configure the system 100 to be operated in a state in which the storage medium flows from the storage medium discharge port 12 via the reservoir(s) 41, 42 to the storage medium supply port 11 (via the first flow connection 31, 32). The switching valve 50 may also configure the system 100 to be operated in a state in which the storage medium flows from the storage medium discharge port 12 directly to the storage medium supply port 11 (via the bypass forming the second flow connection 33) without passing through the reservoir(s) 41, 42.

The system 100 is configured to carry out a method of discharging hydrogen from a storage medium charged with hydrogen which will be described in the following.

The method comprises a step of tempering the storage medium by the heat transfer element 20. The storage medium is thereby tempered to a temperature desired or necessary to carry out a dehydrogenation reaction within the reactor 10. Preferably, the storage medium is tempered by the heat transfer element 20 before supplying the storage medium into the reactor 10. In other words, the storage medium is tempered outside of the reactor 10.

It is preferred that the storage medium is tempered by the heat transfer element 20 to a predetermined temperature, for example to a temperature in a range of 20 - 100 °C, 40 - 95 °C, or 60 - 90 °C. The storage medium may be heated or cooled by the heat transfer element 20 to have the predetermined temperature.

The storage medium is then supplied into the reactor 10 via the piping of the system 100 and the storage medium supply port 11 of the reactor 10.

After supplying the storage medium into the reactor 10, a hydrogen discharging step is performed. In the presence of the catalyst 15 and under the conditions set in the reactor 10, the storage medium performs a dehydrogenation reaction with the catalyst 15, whereby hydrogen stored in the storage medium is discharged from said storage medium.

The conditions set in the reactor 10 may include a pressure within the reactor 10 (within the through-flow section 13 thereof). It is preferred that the reactor is pressurized to a pressure of greater than 0 bar and less than or equal to 3 bar. The reactor 10 may be pressurized by use of hydrogen gas. In this way, the chemical equilibrium reaction is shifted towards a dehydrogenation reaction such that a dehydrogenation reaction dominates over a hydrogenation reaction.

In the hydrogen discharging step carried out within the reactor 10, preferably no further energy, apart from the heat bound to the storage medium which is supplied into the reactor 10, is actively transferred to or from the system 100 or the reactor 10 (disregarding heat losses or unintentional heat transfer). Preferably, all the heat necessary or desired for the dehydrogenation reaction to be carried out is provided by the heat transfer element 20. It can thus be said that the hydrogen discharging step is an essentially adiabatic process.

The hydrogen discharged from the storage medium may be discharged from the reactor 10 via the hydrogen discharge port 14. For example, the hydrogen discharged from the storage medium may be stored in a hydrogen storage reservoir (not illustrated) from where it can be discharged again and be fed into energy generation.

After the hydrogen discharging step, the storage medium may be discharged from the reactor 10 via the hydrogen discharge port 12. The storage medium may then be supplied into the reservoir(s) 41, 42 in which the storage medium can be (temporarily) stored (via the flow connection 31 which connects the storage medium discharge port 12 with the reservoir(s) 41, 42). When desired, the storage medium can be discharged from the reservoir(s) 41, 42 again, be (optionally) tempered by the heat transfer element 20 and be supplied into the reactor 10 (via the flow connection 32 which connects the reservoir(s) 41, 42 with the storage medium supply port 11), for example for being charged with hydrogen again.

The storage medium discharged from the reactor 10 may also be (immediately after having been discharged) tempered and supplied into the reactor 10 again (via the second flow connection 33 forming the bypass) without being stored in the reservoir (s) 41, 42 in between. The reservoir (s) 41, 42 are thereby bypassed such that the storage medium does not flow through the reservoir(s) 41, 42. The storage medium discharged from the reactor 12 thus passes through the pump 60 and the heat transfer element 20 for being tempered and is then supplied into the reactor 10 again, for example for further discharging the storage medium from hydrogen. In this way, the storage medium is circulated through the reactor 10 several times (i.e., two or more times). This may be performed to increase the efficiency of the process.

It may be the case that the storage medium already has the desired or necessary temperature for the dehydrogenation reaction, such that the storage medium does not necessarily need to be tempered by the heat transfer element 20 in this case.

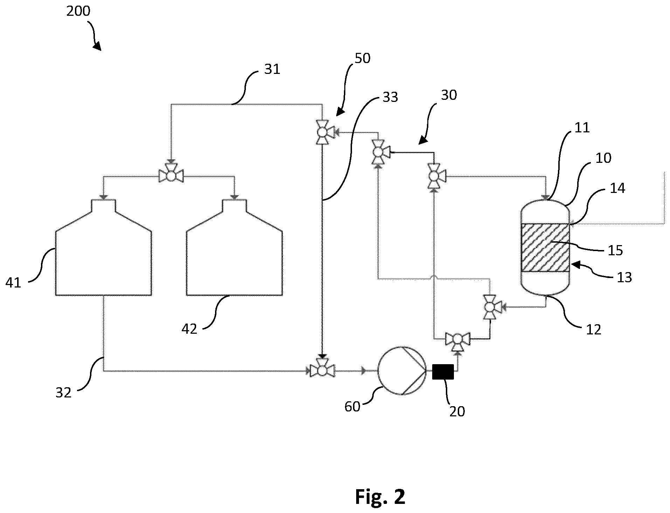

Figure 2 is a schematic view of a system 200 for charging a storage medium with hydrogen. This system 200 may be the same system 100 as described above for discharging hydrogen from a storage medium which is also for charging a storage medium with hydrogen. It may, however, also be a separate system specifically for charging a storage medium with hydrogen.

The system 200 has essentially the same structure as described above with respect to the system 100. The description above with respect to system 100 thus applies, mutatis mutandis, to the system 200 described hereinbelow. The same reference signs are used to refer to features with the same or an equivalent function and/or structure. In the following, only the differences of the system 200 for charging a storage medium with hydrogen relative to the system 100 for discharging hydrogen from a storage medium are described.

The reactor 10 in the system 200 comprises a storage medium supply port 11 arranged at the top (upper portion) of the reactor 10, and a storage medium discharge port 12 arranged at the bottom (lower portion) of the reactor 10. The positions of the storage medium supply and discharge port 11, 12 in the system 200 may thus be inverted relative to the system 100. In the system 200, the storage medium may thus flow through the through-flow section 13 of the reactor 10 in an opposite direction than in the system 100.

The storage medium supply port 11 in the system 100 may be the storage medium discharge port 12 in the system 200, and the storage medium discharge port 12 in the system 100 may be the storage medium supply port 11 in the system 200. In a single system for discharging and charging a storage medium from/with hydrogen, a switching valve (or a group of switching valves) may be provided which are configured to switch the flow direction of the storage medium through the reactor 10. Alternatively, separate ports for supplying and discharging the storage medium when charging the storage medium with hydrogen may be provided in the system in addition to the respective ports when discharging the storage medium from hydrogen.

The reactor 10 is preferably formed as a trickle-bed reactor in which the storage medium supplied into the reactor 10 at the top (upper portion) thereof is trickled from above the catalyst 15 provided in the through-flow section 13 over said catalyst 15.

The positions of the storage medium supply and discharge port 11, 12 in the system 200 may also be the same as in the system 100 (as described above). In this case, the reactor 10 is preferably formed as a fixed-bed reactor.

In the system 200, the reactor 10 comprises a hydrogen supply port 14 through which hydrogen to be stored in the storage medium is supplied into the reactor 10. The hydrogen supply port 14 may be understood as the opening for the hydrogen to enter the through-flow section 13. The hydrogen supply port 14 in the system 200 may be the hydrogen discharge port 14 in the system 100 or may be a separate port provided in the reactor 10. For example, the hydrogen supply port 14 is connected to a hydrogen source or a hydrogen reservoir.

Although Figure 2 illustrates the hydrogen supply port 14 and the storage medium supply port 11 as separate ports (e.g., openings), the hydrogen supply port 14 and the storage medium supply port 11 may be formed as a single port (e.g., opening). In this case, a two-phase system comprising the storage medium and hydrogen gas to be stored within the storage medium is supplied to the reactor through the hydrogen supply port 14 and the storage medium supply port 11 formed as a single port.

The reactor 10 in the system 200 is configured to carry out a hydrogenation reaction. In particular, the catalyst 15 in the system 200 is configured to perform a hydrogenation reaction with the storage medium, thereby charging the storage medium with hydrogen. In other words, under the conditions set in the reactor 10, during contact time of the storage medium flowing through the through-flow section 13 with the catalyst 15, a hydrogenation reaction is carried out. Thereby, hydrogen supplied into the reactor 10 via the hydrogen supply port 14 is stored in said storage medium.

The catalyst 15 in the system 200 may be the same catalyst 15 utilized in the system 100 but may also be a different type of catalyst. It is not particularly limited to specific catalysts, as long as the catalyst 15 is suitable to perform a hydrogenation reaction with the storage medium.

As discussed above, a hydrogenation reaction typically takes place as part of a reversible chemical equilibrium reaction. By adjusting the conditions (such as temperature and/or pressure) within the reactor 10, the equilibrium can be shifted either towards a dehydrogenation or hydrogenation reaction. In the system 200 for charging a storage medium with hydrogen, conditions in the reactor 10, i.e., a temperature and/or a pressure, are set such that a hydrogenation reaction dominates over a dehydrogenation reaction (the equilibrium is shifted towards a dehydrogenation reaction). Thereby, the storage medium is effectively charged with hydrogen.

Depending on the conditions, i.e., temperature and/or pressure, set within the reactor 10, the reactor 10 is either configured to carry out a dehydrogenation reaction or configured to carry out a hydrogenation reaction. By adjusting the conditions in the reactor 10, the reactor 10 can be configured to selectively carry out a dehydrogenation reaction and a hydrogenation reaction, such that the catalyst 15 provided in the through-flow section 13 is configured to selectively perform a dehydrogenation reaction or a hydrogenation reaction with the storage medium.

The system 200 also comprises a heat transfer element 20 arranged outside the reactor 10. Preferably, the heat transfer element 20 of the system 200 is formed, arranged, and configured as described above with respect to the system 100. In a single system for discharging and charging a storage medium from/with hydrogen, either a single heat transfer element 20 or separate (for example two) heat transfer elements may be provided.

Further, each of the at least one heat transfer element 20 may be configured as a single heat transfer element 20 or as two or more heat transfer elements 20 that are controlled to provide the cooling or heating necessary for the process to be carried out (i.e., hydrogenation or dehydrogenation).

In the system 200, apart from the energy transferred to or from the storage medium by means of the heat transfer element 20, no further energy needs to be actively supplied to or transferred from the system 200 for the hydrogenation reaction to be carried out.

In particular, the reactor 10 does not need to be actively tempered, i.e., heated or cooled. This means that the reactor 10 itself does not require any heat transfer element. In this way, the reactor 10 forms a relatively simple reactor which does not require a complex internal structure for transferring heat for the hydrogenation reaction. Thereby, overall complexity of the system 200 is reduced and cost savings for setting up and operating the system 200 can be realized.

It can be said that the hydrogenation reaction carried out in the reactor 10 is an essentially adiabatic process. That is, within the reactor 10 no heat is supplied to or transferred from the system 200 for the hydrogenation reaction. This should however not be construed in a strict literal thermodynamical sense since heat losses or unintentional heat exchange may still occur in the reactor 10.

In the system 200, the heat transfer element 20 may be configured to cool the storage medium to carry out the (exothermic) hydrogenation reaction within the reactor 10.

In some embodiments, however, it is preferred that the heat transfer element 20 of the system 200 is configured to heat the storage medium to carry out the (exothermic) hydrogenation reaction within the reactor 10. That is, although heat is generated by the exothermic hydrogenation reaction, it can be preferred to heat (preheat) the storage medium before supplying it into the reactor 10.

Thereby, the system 200 can be operated efficiently even under relatively cold ambient temperatures, where the storage medium (before being heated by the heat transfer element) may have a lower temperature than a desired temperature for the hydrogenation reaction.

By preheating the storage medium for the hydrogenation reaction, responsiveness of the storage medium can be enhanced. That is, for example, after dehydrogenation, the storage medium may have a relatively low temperature such that the hydrogenation reaction is performed relatively slow. Hence, it takes a relatively long time until a desired degree of hydrogenation of the storage medium is reached. Moreover, the heat generated in the exothermic hydrogenation reaction may not be sufficient such that the reaction system reaches the temperature necessary or desired for the hydrogenation reaction. Therefore, even for the exothermic hydrogenation reaction, it is advantageous to heat the storage medium for improving responsiveness of the reaction system. The efficiency of the system 200 can thereby be improved.

The system 200 is configured to carry out a method of charging a storage medium with hydrogen which will be described in the following.

The method comprises a step of tempering the storage medium by the heat transfer element 20. The storage medium is thereby tempered to a temperature desired or necessary to carry out a hydrogenation reaction within the reactor 10. Preferably, the storage medium is tempered by the heat transfer element 20 before supplying the storage medium into the reactor 10. In other words, the storage medium is tempered outside of the reactor 10.

It is preferred that the storage medium is tempered by the heat transfer element 20 to a predetermined temperature, for example to a temperature in the range of 20 - 100 °C, 40 - 95 °C, or 60 - 90 °C. The storage medium may be heated or cooled by the heat transfer element 20 to have the predetermined temperature.

The storage medium is then supplied into the reactor 10 via the piping of the system 100 and the storage medium supply port 11 of the reactor 10.

After supplying the storage medium into the reactor 10, a hydrogen charging step is performed. In said hydrogen charging step, hydrogen to be stored in the storage medium is supplied into the reactor via the hydrogen supply port 14. In the presence of the catalyst 15 and under the conditions set in the reactor 10, the storage medium performs a hydrogenation reaction with the catalyst 15, whereby the storage medium is charged with hydrogen.

The conditions set in the reactor 10 may include a pressure within the reactor 10 (within the through-flow section 13 thereof). It is preferred that the reactor is pressurized to a pressure of greater than or equal to 5 bar and less than or equal to 60 bar, more preferably to a pressure of greater than or equal to 10 bar and less than or equal to 30 bar. The reactor 10 may be pressurized by use (e.g., supply or release/discharge) of hydrogen gas. In this way, the chemical equilibrium reaction is shifted towards a hydrogenation reaction such that a hydrogenation reaction dominates over a dehydrogenation reaction.

In the hydrogen charging step carried out within the reactor 10, preferably no further energy, apart from the heat bound to the storage medium which is supplied into the reactor 10, is actively transferred to or from the system 200 or the reactor 10 (disregarding heat losses or unintentional heat transfer). Preferably, all the heat necessary or desired for the hydrogenation reaction to be carried out is provided by the heat transfer element 20. It can thus be said that the hydrogen charging step is an essentially adiabatic process.

The storage medium discharged from the reactor 10 can be supplied into the reservoir(s) 41, 42 as described above for the method of discharging hydrogen from a storage medium. It can be stored in the reservoir(s) 41, 42 and, when desired, discharged therefrom, for example for being discharged from hydrogen again.

The storage medium discharged from the reactor 10 may also be tempered (which is optional) and supplied into the reactor 10 again as described above for the method of discharging hydrogen from a storage medium, for example for further discharging hydrogen from the storage medium.

## Claims

1. A system (100) for discharging hydrogen from a storage medium charged with hydrogen, the system (100) comprising
a reactor (10) configured to carry out a dehydrogenation reaction, the reactor (10) comprising:
a storage medium supply port (11) for supplying the storage medium,
a storage medium discharge port (12) for discharging the storage medium,
a through-flow section (13) through which the storage medium flows, and
a hydrogen discharge port (14) for discharging hydrogen discharged from the storage medium,
wherein a catalyst (15) is provided in the through-flow section (13) and is configured to perform a dehydrogenation reaction with the storage medium to discharge hydrogen from the storage medium; and
a heat transfer element (20) configured to temper the storage medium for the dehydrogenation reaction, wherein the heat transfer element (20) is arranged outside the reactor (10).

2. The system (100) according to claim 1,
wherein the heat transfer element (20) is arranged and configured to temper the storage medium before it is supplied into the reactor (10).

3. The system (100) according to claims 1 or 2, wherein the reactor (10) has no heat transfer element.

4. The system (100) according to any one of claims 1 to 3,
wherein the storage medium is an aqueous reaction system of the components formate salt, hydrogen carbonate salt and carbonate salt.

5. The system (100) according to any one of the preceding claims, wherein the system (100) is further for charging a storage medium with hydrogen, wherein
the reactor (10) is further configured to carry out a hydrogenation reaction and comprises:
a hydrogen supply port (14) for supplying hydrogen,
wherein the reactor (10) is configured to perform a hydrogenation reaction with the storage medium to charge the storage medium with hydrogen and preferably a further catalyst (15) is provided in the through-flow section (13),
wherein the system (100) is configured to temper the storage medium for the hydrogenation reaction and preferably further comprises another heat transfer element (20), wherein the heat transfer element (20) is arranged outside the reactor (10).

6. The system (100) according to any one of the preceding claims,
wherein the storage medium supply port (11) is connected to the storage medium discharge port (12) via a flow connection (30) outside the reactor (10).

7. The system (100) according to any one of the preceding claims,
wherein the system (100) comprises a storage medium flow channel providing a first flow connection (31, 32) connecting the storage medium supply port (11) and the storage medium discharge port (12) to a first reservoir (41) for storing the storage medium, or to a first and a second reservoir (41, 42) for storing the storage medium, respectively.

8. The system (100) according to claim 7,
wherein the system (100) further comprises a bypass providing a second flow connection (33) connecting the storage medium supply port (11) and the storage medium discharge port (12) and bypassing the reservoir(s) (41, 42).

9. The system (100) according to claim 8,
wherein the system (100) further comprises a switching valve (50) configured to switch between a state in which the storage medium flows along the first flow connection (31, 32) or a state in which the storage medium flows along the second flow connection (33).

10. A method of discharging hydrogen from a storage medium charged with hydrogen or of charging a storage medium with hydrogen, the method comprising:
tempering the storage medium by a heat transfer element (20) ;
supplying the storage medium into a reactor (10); and
performing a hydrogen discharging step in which the storage medium performs a dehydrogenation reaction in the presence of a catalyst (15) provided in the reactor (10), thereby discharging hydrogen from the storage medium, or
performing a hydrogen charging step in which hydrogen is supplied into the reactor and the storage medium performs a hydrogenation reaction in the presence of a catalyst (15) provided in the reactor (10), thereby charging the storage medium with hydrogen.

11. The method according to claim 10,
wherein the storage medium is an aqueous reaction system of the components formate salt, hydrogen carbonate salt and carbonate salt.

12. The method according to claim 10 or 11,
wherein the storage medium is tempered to a predetermined temperature, preferably to 20 - 100 °C, more preferably to 40 - 95 °C or even more preferably to 60 - 90 °C, by the heat transfer element (20) for carrying out the dehydrogenation or hydrogenation reaction.

13. The method according to any one of claims 10 to 12,
wherein the heat transfer element (20) tempers the storage medium before it is supplied into the reactor and wherein preferably no additional heat for the dehydrogenation or hydrogenation reaction is supplied into the reactor (10) or extracted from the reactor (10).

14. The method according to any one of claims 10 to 13,
wherein, for the hydrogen discharging step, the reactor (10) is pressurized to greater than 0 bar and less than or equal to 3 bar, and/or
wherein, for the hydrogen charging step, the reactor (10) is pressurized to greater than or equal to 5 bar and less than or equal to 60 bar.

15. The method according to any one of claims 10 to 14,
wherein the storage medium is discharged from the reactor (10) and selectively supplied into a reservoir (41, 42) for storing the storage medium or tempered and supplied into the reactor (10) again.
